# EUROPEAN PATENT SPECIFICATION

(11) **EP 4 000 915 B1**
(45) Date of publication and mention of the grant of the patent: **13.11.2024**
(21) Application number: 20217839.8
(22) Date of filing: 30.12.2020
(51) Int. Cl.: B32B 3/06, B32B 7/022, B32B 7/14, B32B 15/20, B32B 15/14, B32B 3/26, B32B 5/02, B32B 27/12, B32B 27/32, B32B 27/34, E04D 3/35, B32B 3/08

(54) **ROOF LAMINATE WITH FLEXIBLE EDGES**
DACHLAMINAT MIT FLEXIBLEN RÄNDERN
STRATIFIÉ DE TOIT À BORDS FLEXIBLES

(30) Priority: 18.11.2020 GR 20200100686
(43) Date of publication of application: 25.05.2022
(73) Proprietor: Thrace Nonwovens & Geosynthetics S.A., 67100 Magiko Xanthis (GR)
(72) Inventor: GEORGIADIS, George, 67100 Xanthi (GR); KLAUSEN, Thomas, 31224 Peine (DE)
(74) Representative: Samouilidis, Emmanouil

(56) References cited:
- EP-A1- 2 592 196
- EP-A1- 3 002 382
- EP-A1- 3 345 755
- EP-A2- 1 715 110
- EP-B1- 1 715 110
- EP-B1- 2 592 196
- EP-B1- 3 002 382
- GB-A- 2 080 196
- US-A1- 2006 292 328

## Description

The invention relates to laminates that are used in the construction of roofs and a method to join two laminates.

Laminates or underlays for roofs include a reinforcement element and an active element, which provides appropriate insulation and water-tightness of the laminate. The laminate may be placed towards the outside of the house, i.e. above the rafters and below the tiles or towards the inside, i.e. below the rafters. A laminate with a sealing layer that is based on TPU on a carrier layer is described in EP- 2592196.

When used in the outside, above the rafters of the roof, the active element usually has a microporous film, for example PP or PE or a monolithic element, for example TPU or TPE film, that allows vapour transfer from the inside to the outside of the roof. A protective layer, for example a spunbond may be placed above the active film so as to protect it.

When the laminate is placed below the rafters, the active film may be a vapour control element with a film that has a variable vapour transmission capacity so as to control the vapour transmission from the inside to the outside of the construction. Materials used for the vapour control film are for example polypropylene (PP), polyethylene (PE), and polyamide (PA),

It is also possible to build a roof with a laminate above the rafters and a further laminate below the rafters. In such cases it is usual to have an insulation layer between the outer laminate and the inner laminate. EP-1715110 describes an insulating material for heat insulation of roofs that is placed between rafters.

When building a roof, two adjacent laminates are joined together by attaching a strip of one laminate to a strip of the other laminate. Known laminates are attached to each other by thermal adhesion, such as thermal adhesion of TPU layers.

An object of the invention is a laminate that permits a strong bonding between adjacent laminates. A further object of the invention is a roof construction that is water-tight. A further object of the invention is an environmental friendly roof construction. A further object of the invention is an energy-saving roof construction. A further object of the invention is a method to join two adjacent laminates on a roof, as well as laminates that facilitate their effective bonding to each other.

The invention is defined in the independent claims.

A laminate for roofs according to the invention includes a reinforcement element with a net or a woven fabric and an active element. The active element, which provides the water-tightness of the laminate, is more flexible than the reinforcement element and has a strip overhanging beyond an edge of the reinforcement element. An adhesive material, for example an adhesive tape, is provided along the overhanging strip and to a face of the active element, which is in contact with the reinforcement element.

A method to attach two adjacent laminates according to the invention includes the following steps: a) bring in an overlapping disposition the two laminates so that a strip of one laminate contacts a strip of the other laminate, whereby the strip of one laminate is more flexible that the strip of the other laminate, b) tighten the strip that has lower flexibility on the other strip, c) attach the two strips with an adhesive material.

The preparation for the joining of two adjacent laminates is facilitated, when the strength of one laminate is more flexible than the adjacent laminate, because the more flexible laminate can be stretched over less the flexible laminate, so as to avoid air-gaps in between. With a laminate according to the invention, this is achieved by providing a strip of the active element with higher flexibility beyond the edge of the reinforcement element. Thus, water-tightness, effective insulation and effective bonding is achieved without compromising the strength of any laminate. Flexibility is controlled through the strength of the laminate, in particular the tensile strength.

The dependent claims define further features that offer further advantages when combined with the features of the invention.

An adhesive material, for example an adhesive tape, is provided along the overhanging strip and to a face of the active element, which is in contact with the reinforcement element. The adhesive material is used to attach the laminate to an adjacent laminate, when laying the laminate of a roof, with cold bonding.

The flexibility of the elements may be controlled by their tensile strength. To this end the tensile strength of the active element of a laminate is lower than the tensile strength of its reinforcement element so that the overhanging strip is more flexible than reinforcement element and the laminate. When two laminates are joined together, the more flexible strip of one laminate is joint along a more rigid edge of its adjacent laminate, i.e. along a strip of the adjacent laminate which includes a strip-portion of the reinforcement element of the adjacent laminate.

The reinforcement element is a net or a woven fabric. In some examples the reinforcement element may be multi-layer.

The active element may be a monolithic or a microporous breathable layer. The material of the monolithic layer may be or may contain TPU or TPE.

Alternatively the active element may include a vapour control layer with variable varpour permeability that controls the vapour transmission through it. The vapour control layer is made of polypropylene (PP), polyethylene (PE), polyamide (PA), TPU or TPE or includes polypropylene (PP), polyethylene (PE), polyamide (PA), thermoplastic polyurethane (TPU) or thermoplastic elastomer (TPE).

Preferably the active element contains a protective layer, for example spunbond layer, to protect the active film.

Is some examples of the invention the laminate has four layers, i.e. a spunbond and an active layer that form the active element and a woven fabric or net and spunbond that form the reinforcement layer. In general the laminate may be a sandwich between two spunbonds.

In some examples, the active element includes a spunbond layer and an active film and the reinforcement element includes a woven fabric. The film is usually in-between the spunbond and the woven fabric. Further advantages are offered, when joining of adjacent laminates is effected between the active layers, such as between the active films. To this end a laminate may have a further strip other than the strip overhanging the reinforcement element, which extends beyond an edge of the spunbond layer and includes a strip-portion of the active film and a strip-portion the woven fabric. A strip of adhesive material, preferably an adhesive tape, is provided along the further strip on the active film. The strip overhanging the reinforcement element and the further strip are provided along opposite edges of the laminate or along adjacent edges of the laminate.

The active element or the reinforcement element may further include an aluminum porous or continuous foil. Alternatively a porous or continuous metallized film may be used instead of an aluminum foil.

A laminate according to the invention has a high tensile strength and provides high shear strength of the joint when two adjacent laminates are attached to each other. The joint of the adjacent laminates is air-tight and water tight, since there are no air gaps that damage the air- and water- tightness of the joint. Further the strength under transverse loading is high because of the reinforcement. With a laminate of the invention tensile strength of 500 N per 5 cm of edge width of the laminate may be exceeded. Thus, damages and accidents are avoided, when during construction, the user steps on a laminate between the rafters of a roof. Strong joints and roof constructions are also achieved when laying laminates on a roof with a method according to the invention. Water permeability or water tightness and vapour permeability are defined in accordance with EN13859-1 and EN13859-2.

Preferred embodiments of the invention are described with reference to **Figures 1 to 6****:**
**Figure 1** shows schematically an example of a laminate according to the invention
**Figure 2** illustrates schematically the problem of poor cohesion along the cross-section of the joint of two adjacent laminates known in the field
**Figure 3** shows schematically the attachment of two adjacent laminates according to the invention
**Figure 4** shows schematically an alternative embodiment of a laminate according to the invention
**Figure 5** shows schematically an example of a laminate with an alumimum foil according to the invention
**Figure 6** shows schematically a further example of a laminate with an alumimum foil according to the invention

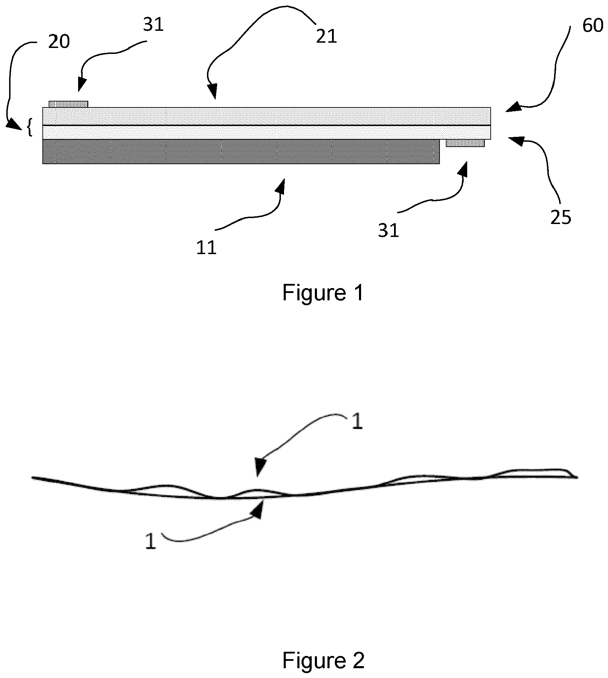

**Figure 1** shows an example of a laminate **(1)** according to the invention. The laminate **(1)** has three layers, a top layer that is a spunbond **(21),** a middle layer that is an active film **(25)** and a bottom layer that is a woven fabric **(11).** The top and middle layer, i.e. the spunbond **(21)** and the film **(25),** form the active element **(20)** and the bottom layer, i.e. the woven fabric **(11)** forms the reinforcement element **(10).** The film may consist of or include different materials, such as PP, PE, PA, TPU, TPE.

In laminates that are to be used as outer breathable roofing membranes, i.e. above the rafters and/or the thermal insulation, the film may be microporous or monolithic. In laminates that are to be used as inner laminates, i.e. below the rafters and/or the thermal insulation, the film may be a vapour control layer.

The strength of the woven fabric **(11)** provides an additional stiffness to the laminate **(1)** and enables an improved lay-down of the laminate **(1)** on horizontal or inclined, pitched, roofs so that the laminate **(1)** can be strongly pulled over the rafters, when the laminate **(1)** is used above the rafters.

The width of the spunbond **(21)** and the active film **(25)** is larger than the width of the woven fabric **(11),** so that the laminate **(1)** has a very flexible and soft strip **(60)** that overhangs beyond the more rigid and stronger woven fabric **(11).** In some examples the width of the active element **(20),** i.e. the spunbond **(21)** and the film **(25)** is 2 cm to 15 cm larger, preferably 10 to 15 cm larger, than the width of the reinforcement element **(10).**

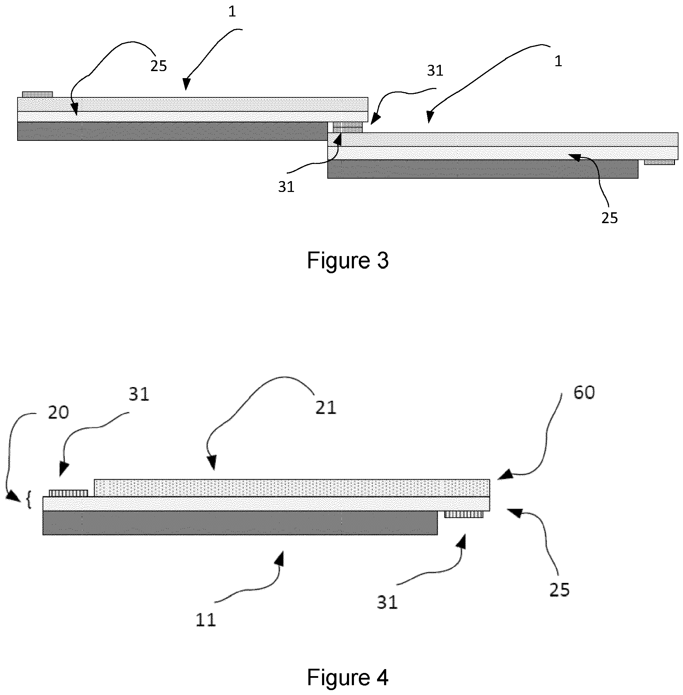

The active element **(20)** of the overhanging strip **(60)** is covered at least partially over its width with an adhesive material **(31),** for example an adhesive tape **(31)** of pressure sensitive adhesive (PSA). The adjacent laminate has a further adhesive material along a strip on the spunbond **(21)** that in use will be joint to the corresponding adhesive material **(31)** of the overhanging strip **(60),** as schematically is shown in **Figure 3****,** by cold bonding, i.e. without requiring input of thermal energy. The adhesive material **(31)** may be protected by a liner not shown in the Figures before connecting the laminates **(1)** together.

As it illustrated in **Figure 3****,** the adhesive material is applied on the film of the soft edge and on the top side of the spunbond of the adjacent laminate, so as to form a joint between a soft strip of one laminate and a strong strip of the other laminate. Bu attaching a soft strip to a relative harder strip, it is easy to avoid the wavy performance and the subsequent air-gaps between overlapping strips of adjacent laminates, such as those shown in **Figure 2****.**

In an alternative embodiment of the invention shown in **Figure 4****,** the film **(25)** and the woven fabric **(11)** attached to it form an overhanging strip that extends beyond an edge of the spunbond **(21).** This strip of active film **(25)** and woven fabric **(11)** is much stronger than the overhanging strip **(60),** because it includes the woven fabric **(11).** Soft and flexible strip **(60)** is designated as a "soft edge" or "open edge". In the alternative embodiment of **Figure 4****,** the adhesive material **(31)** is applied on the active film **(25)** rather than on the spunbond **(21),** a feature that provides a stronger and more durable joint between adjacent laminates, as the cohesion is effected between two active films **(25).**

The joint of a soft, more flexible, strip and a strong, less flexible, strip enables a complete adhesion of two laminates over the full area of the roof, so that gaps along the joints are avoided and the joints establish a watertight and airtight connection between the laminates. Such a connection may be achieved between two adjacent laminates either by providing the adhesion material on the active film of one laminate and on the spunbond on the other, as shown schematically in **Figure 3****,** or by providing the adhesive material on the active film of both laminates, as schematically shown in **Figure 4****.** The laminate has a high tensile strength and provides high shear strength of the joint when two adjacent laminates are attached to each other. The joint of the adjacent laminates is air-tight and water tight, since there are no air gaps that damage the air- and water- tightness of the joint. Further, the strength under transverse loading is high and with a laminate of the invention the tensile strength exceeds 500 N per 5 cm of edge width of the laminate. Thus, damages and accidents are avoided, when during construction, the user steps on a laminate between the rafters of a roof.

Examples of the invention are described below:
One example consists of three layers, a spunbond and an active film that make the active element and a woven fabric or a net, with the film being in between the spunbond and the woven fabric or net.

In a further example the face of the woven fabric is also covered by a spunbond.

When used towards the outside of the roof the reinforcement element (10) has a woven fabric **(11)** and the active element **(20)** has a monolithic film **(25),** for example of TPU or TPE or containing TPU or TPE. In use the laminate **(1)** is placed with the reinforcement element **(10)** below the active element **(20),** i.e. towards the interior of the building.

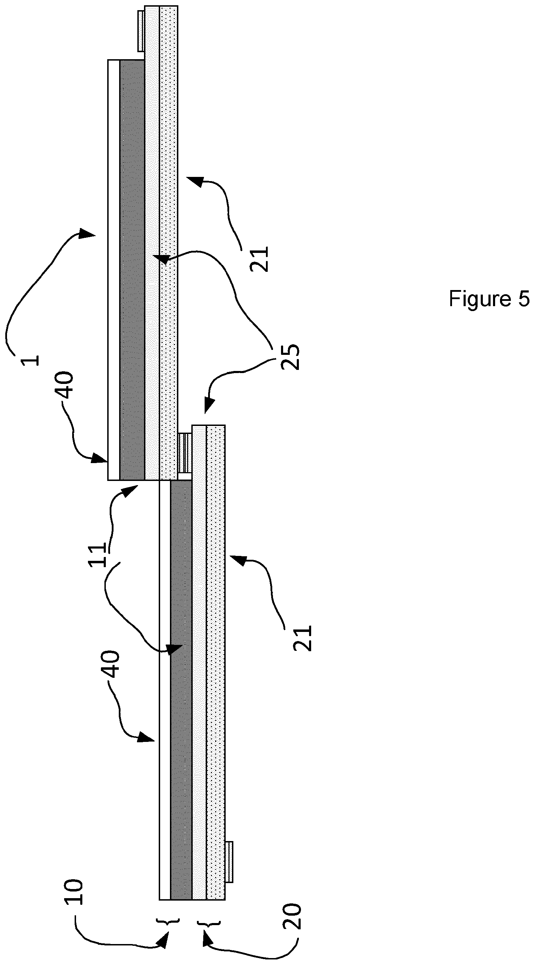

In another example of a laminate **(1)** used towards the outside of the roof, the reinforcement element **(10)** has a woven fabric **(11)** and a further perforated or closed aluminum foil **(40),** which acts as a heat reflector, and the active element **(20)** has a microporous film **(25)** and a spunbond **(21),** for example of PP or PE or containing PP or PE. This example is schematically presented in **Figure 5****.** In use the laminate **(1)** is placed with the reinforcement element **(10)** above the active element **(20),** i.e. facing the exterior of the building.

When used towards the inside the reinforcement element **(10)** has a woven fabric **(11)** and the active element **(20)** has a monolithic vapour control layer **(25)** and a spunbond **(21)** for protection. In use this laminate **(1)** is placed with the reinforcement element **(10)** above the active element, i.e. facing outside of the building.

In another example of a laminate **(1)** used towards the inside, the reinforcement element **(10)** has a woven fabric **(11)** and a further perforated or closed aluminum foil **(40),** which acts a heat reflector and the active element **(20)** has a monolithic vapour control layer **(25)** and a spunbond **(221** for protection. In use this laminate **(1)** is placed with the reinforcement element **(10)** below the active element **(20),** i.e. facing inside.

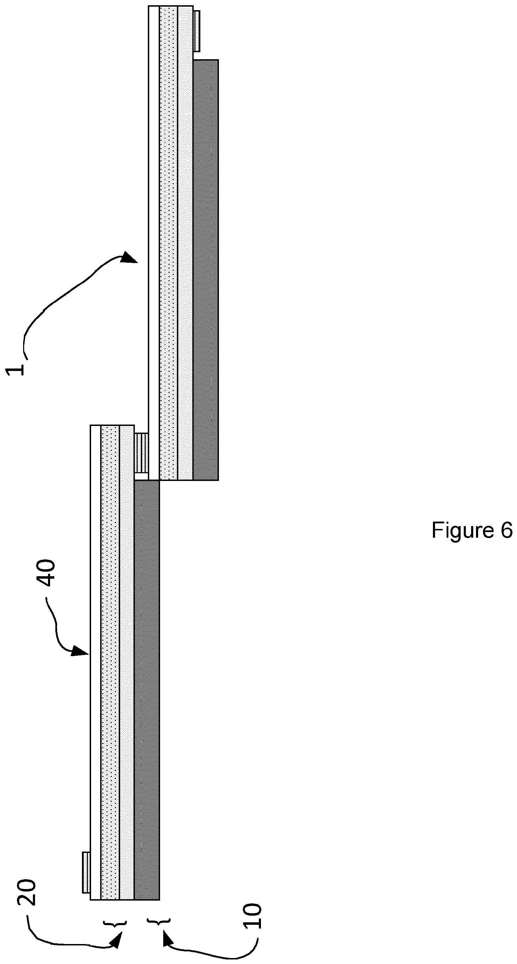

In an alternative of the examples presented above, which include an aluminum foil **(40),** the aluminum foil **(40)** may be part of the active element **(20)** rather than of the reinforcement element **(10),** for example by attaching it to the spunbond **(21).** Such an example is schematically presented in **Figure 6** that shows a laminate with an aluminum foil **(40),** a spunbond **(21),** an active film **(20)** and a woven fabric **(11).** Alternatively a porous or continuous metallized film, preferably with aluminum, may be used instead of an aluminum foil.

In the previous examples and in some further examples the width of the laminate may be 100 cm to 300 cm and its weight 140 gr/m² to 350 gr/m² - not including the weight of the adhesive tape. The open edge, i.e. the overhanding strip **(60)** of the active element has a width of 2 cm to 20 cm, preferably between 10 cm and 20 cm and the adhesive tape has a width of equal of less than the width of the overhanging strip **(60).** The weight of the adhesion tape may be between 60 gr/m² to 200 gr/m².

The various layers of a laminate, are attached to each other by methods known in the art.

All the above embodiments are examples that do no limit the scope of the protection. Further examples are anticipated within the invention as it is defined in the independent claims.

## Claims

1. Laminate **(1)** for insulation of roofs including a reinforcement element **(10)** with a net or a woven fabric **(11)** and a water-tight active element **(20),** whereby the active element **(20)** is more flexible than the reinforcement element **(10),** and **characterized in that** the active element **(20)** has a strip **(60)** overhanging beyond an edge of the reinforcement element **(10),** and the laminate has a strip of adhesive material **(31),** for example an adhesive tape is provided along the overhanging strip **(60)** and to a face of the active element **(20)** which is in contact with the reinforcement element **(10),** and the adhesive material **(31)** is used to attach two adjacent laminates **(1)**.

2. Laminate **(1) according claim 1,** whereby the tensile strength of the active element **(20)** is lower than the tensile strength of the reinforcement element **(10).**

3. Laminate **(1) according to any one of claims or claim 2,** whereby the reinforcement element **(10)** has a woven fabric **(11).**

4. Laminate **(1) according to any one of claims 1 to 3,** whereby the laminate includes one of i) a perforated aluminum foil **(40),** ii) a closed aluminum foil **(40),** iii) a perforated metallized film, iv) a closed metallized film, either in the active element **(20)** or in the reinforcement element **(10).**

5. Laminate **(1) according to anyone of claims 1 to 4**, whereby the active element **(20)** includes a water-tight monolithic breathable layer **(25),** preferably made of TPU or TPE or including TPU or TPE, or a water-tight microporous breathable layer **(25).**

6. Laminate **(1) according to anyone of claims 1 to 4,** whereby the active element **(20)** includes a vapour control layer **(25)** with variable permeability to controls the vapour transmission through it.

7. Laminate **(1) according to claim 6**, whereby the vapour control layer **(25)** either contains or is made of one of the following materials: i) polypropylene (PP), ii) polyethylene (PE), iii) polyamide (PA), iv) thermoplastic polyurethane (TPU), v) thermoplastic elastomer (TPE).

8. Laminate **(1) accordingto anyone of claims 1 to 7**, whereby the active element **(20)** includes a spunbond layer **(21)** and an active film **(25)** and the reinforcement element **(10)** includes a woven fabric **(11),** whereby the active film **(25)** is in-between the spunbond **(21)** and the woven fabric **(11).**

9. Laminate **(1) according to claim 8,** with a further strip other than the strip **(60)** overhanging the reinforcement element **(10),** which further strip extends beyond an edge of the spunbond layer **(21),** includes a strip-portion of the active film **(25)** and a strip-portion of the woven fabric **(11)** and whereby a strip of adhesive material **(31),** preferably an adhesive tape, is provided along the further strip on the active film **(25).**

10. Method to attach two adjacent laminates, i.e. a first laminate and a second laminate, whereby at least the first element is according to any one of claims 1 to 9, the method including the following steps:
• bring in an overlapping disposition the two laminates so that the overhanging strip of the first laminate contacts a strip of the second laminate, whereby the strip of the first laminate is more flexible that the strip of the second laminate,
• tighten the strip that has lower flexibility on the other strip
• attach the two strips with the adhesive material.

11. Method **according to claim** 10, whereby the more flexible strip **(60)** has a tensile strength that is lower than the tensile strength of the less flexible strip.

12. Method **according to claim 10 or claim 11,** whereby each one of the two laminates **(1)** includes a reinforcement layer, a spunbond layer **(21)** and an active film **(25)** between the reinforcement layer and the spunbond layer **(21),** whereby the more flexible strip **(60)** does not include any portion of the reinforcement layer.

13. Method **according to claim 12,** whereby the adhesive material is applied to the active film **(25)** of one laminate **(1)** and the spunbond layer **(21)** or the active film **(25)** of the other laminate **(1).**

14. Method **according to any one of claims 10 to 13**, whereby both laminates are **according to any one of claims** 1 **to 9.**

## Patentansprüche

1. Laminat **(1)** zur Isolierung von Dächern, das ein Verstärkungselement **(10)** mit einem Netz oder einem Gewebe **(11)** und ein wasserdichtes aktives Element **(20)** beinhaltet, wobei das aktive Element **(20)** flexibler ist als das Verstärkungselement (10), und **dadurch gekennzeichnet, dass** das aktive Element **(20)** einen Streifen **(60)** aufweist, welcher über eine Kante des Verstärkungselements **(10)** hinaus überhängt, und das Laminat einen Streifen aus Klebematerial **(31)** aufweist, beispielsweise ein Klebeband entlang des überhängenden Streifens **(60)** und an einer Seite des aktiven Elements **(20)** bereitgestellt ist, welche mit dem Verstärkungselement **(10)** in Kontakt steht, und das Klebematerial **(31)** verwendet wird, um zwei benachbarte Laminate **(1)** zu befestigen.

2. Laminat **(1) nach Anspruch 1,** wobei die Zugfestigkeit des aktiven Elements **(20)** geringer ist als die Zugfestigkeit des Verstärkungselements **(10).**

3. Laminat **(1) nach einem der Ansprüche oder Anspruch 2,** wobei das Verstärkungselement **(10)** ein Gewebe **(11)** aufweist.

4. Laminat **(1) nach einem der Ansprüche 1 bis 3,** wobei das Laminat entweder in dem aktiven Element **(20)** oder in dem Verstärkungselement **(10)** eines beinhaltet von i) einer perforierten Aluminiumfolie **(40)**, ii) einer geschlossenen Aluminiumfolie **(40)**, iii) einer perforierten metallisierten Folie oder iv) einer geschlossenen metallisierten Folie.

5. Laminat **(1) nach einem der Ansprüche 1 bis 4,** wobei das aktive Element **(20)** eine wasserdichte monolithische atmungsaktive Schicht **(25),** vorzugsweise aus TPU oder TPE hergestellt oder TPU oder TPE beinhaltend, oder eine wasserdichte mikroporöse atmungsaktive Schicht **(25)** beinhaltet.

6. Laminat **(1) nach einem der Ansprüche 1 bis 4,** wobei das aktive Element **(20)** eine Dampfbremsschicht **(25)** mit variabler Durchlässigkeit beinhaltet, um die Dampfdurchlässigkeit durch sie hindurch zu regeln.

7. Laminat **(1) nach Anspruch 6,** wobei die Dampfbremsschicht **(25)** entweder eines der folgenden Materialien enthält oder daraus hergestellt ist: i) Polypropylen (PP), ii) Polyethylen (PE), iii) Polyamid (PA), iv) thermoplastisches Polyurethan (TPU), v) thermoplastisches Elastomer (TPE).

8. Laminat **(1) nach einem der Ansprüche 1 bis 7,** wobei das aktive Element **(20)** eine Spinnvliesschicht **(21)** und eine aktive Folie **(25)** beinhaltet und das Verstärkungselement **(10)** ein Gewebe **(11)** beinhaltet, wobei sich die aktive Folie **(25)** zwischen dem Spinnvlies **(21)** und dem Gewebe **(11)** befindet.

9. Laminat **(1) nach Anspruch 8,** mit einem weiteren anderen Streifen als dem über das Verstärkungselement **(10)** überhängenden Streifen **(60),** wobei sich der weitere Streifen über eine Kante der Spinnvliesschicht **(21)** hinaus erstreckt, einen Streifenabschnitt der aktiven Folie **(25)** und einen Streifenabschnitt des Gewebes **(11)** beinhaltet, und wobei entlang des weiteren Streifens auf der aktiven Folie **(25)** ein Streifen aus Klebematerial **(31),** vorzugsweise ein Klebeband, bereitgestellt ist.

10. Verfahren zum Befestigen zweier benachbarter Laminate, d. h. eines ersten Laminats und eines zweiten Laminats, wobei zumindest das erste Element nach einem der Ansprüche 1 bis 9 ist, wobei das Verfahren die folgenden Schritte beinhaltet:
- die beiden Laminate in eine überlappende Anordnung bringen, sodass der überhängende Streifen des ersten Laminats einen Streifen des zweiten Laminats berührt, wobei der Streifen des ersten Laminats flexibler ist als der Streifen des zweiten Laminats,
- den Streifen, der eine geringere Flexibilität aufweist, auf dem anderen Streifen festziehen
- die beiden Streifen mit dem Klebematerial befestigen.

11. Verfahren **nach Anspruch 10,** wobei der flexiblere Streifen **(60)** eine Zugfestigkeit aufweist, welche geringer ist als die Zugfestigkeit des weniger flexiblen Streifens.

12. Verfahren **nach Anspruch 10 oder Anspruch 11,** wobei jedes der beiden Laminate **(1)** eine Verstärkungsschicht, eine Spinnvliesschicht **(21)** und eine aktive Folie **(25)** zwischen der Verstärkungsschicht und der Spinnvliesschicht **(21)** beinhaltet, wobei der flexiblere Streifen **(60)** keinen Abschnitt der Verstärkungsschicht beinhaltet.

13. Verfahren **nach Anspruch 12,** wobei das Klebematerial auf die aktive Folie **(25)** von einem Laminat **(1)** und die Spinnvliesschicht **(21)** oder die aktive Folie **(25)** des anderen Laminats **(1)** aufgetragen wird.

14. Verfahren **nach einem der Ansprüche 10 bis 13,** wobei beide Laminate **nach einem der Ansprüche 1 bis 9 sind.**

## Revendications

1. Stratifié **(1)** pour l'isolation de toitures incluant un élément de renfort **(10)** avec un filet ou un tissu tissé **(11)** et un élément actif étanche à l'eau **(20)**, selon lequel l'élément actif **(20)** est plus souple que l'élément de renfort **(10)**, et **caractérisé en ce que** l'élément actif **(20)** présente une bande **(60)** en surplomb qui s'étend au-delà d'un bord de l'élément de renfort **(10)**, et le stratifié présente une bande de matériau adhésif **(31),** par exemple un ruban adhésif est disposé le long de la bande en surplomb **(60)** et sur une face de l'élément actif **(20)** qui est en contact avec l'élément de renfort **(10)**, et le matériau adhésif **(31)** est utilisé pour fixer deux stratifiés **(1)** adjacents.

2. Stratifié **(1) selon la revendication 1,** selon lequel la résistance à la traction de l'élément actif **(20)** est inférieure à la résistance à la traction de l'élément de renfort **(10).**

3. Stratifié **(1) selon l'une quelconque des revendications ou la revendication 2,** selon lequel l'élément de renfort **(10)** présente un tissu tissé **(11).**

4. Stratifié **(1) selon l'une quelconque des revendications 1 à 3,** selon lequel le stratifié inclut l'un parmi i) une feuille d'aluminium perforée **(40)**, ii) une feuille d'aluminium fermée **(40),** iii) un film métallisé perforé, iv) un film métallisé fermé, soit dans l'élément actif **(20)** soit dans l'élément de renfort **(10).**

5. Stratifié **(1) selon l'une quelconque des revendications 1 à 4,** selon lequel l'élément actif **(20)** inclut une couche respirante monolithique étanche à l'eau **(25),** de préférence en TPU ou TPE ou incluant du TPU ou du TPE, ou une couche respirante microporeuse étanche à l'eau **(25).**

6. Stratifié **(1) selon l'une quelconque des revendications 1 à 4,** selon lequel l'élément actif **(20)** inclut une couche de régulation de vapeur **(25)** à perméabilité variable pour réguler la transmission de vapeur à travers elle.

7. Stratifié **(1) selon la revendication 6,** selon lequel la couche de régulation de vapeur **(25)** contient ou est constituée d'un des matériaux suivants : i) polypropylène (PP), ii) polyéthylène (PE), iii) polyamide (PA), iv) polyuréthane thermoplastique (TPU), v) élastomère thermoplastique (TPE).

8. Stratifié **(1) selon l'une quelconque des revendications 1 à 7,** selon lequel l'élément actif **(20)** inclut une couche de filé-lié **(21)** et un film actif **(25)** et l'élément de renfort **(10)** inclut un tissu tissé **(11),** selon lequel le film actif **(25)** est situé entre le filé-lié **(21)** et le tissu tissé **(11).**

9. Stratifié **(1) selon la revendication 8,** avec une autre bande autre que la bande **(60)** surplombant l'élément de renfort **(10)**, laquelle autre bande s'étend au-delà d'un bord de la couche de filé-lié **(21),** inclut une partie bande du film actif **(25)** et une partie bande du tissu tissé **(11)** et selon lequel une bande de matériau adhésif **(31),** de préférence un ruban adhésif, est disposée le long de l'autre bande sur le film actif **(25).**

10. Procédé de fixation de deux stratifiés adjacents, à savoir un premier stratifié et un second stratifié, selon lequel au moins le premier élément est conforme à l'une quelconque des revendications 1 à 9, le procédé incluant les étapes suivantes :
- l'agencement des deux stratifiés en une disposition superposée de sorte que la bande en surplomb du premier stratifié soit en contact avec une bande du second stratifié, selon lequel la bande du premier stratifié est plus souple que la bande du second stratifié,
- le serrage de la bande qui présente la moins grande souplesse sur l'autre bande
- la fixation des deux bandes avec le matériau adhésif.

11. Procédé **selon la revendication** 10, selon lequel la bande plus souple **(60)** présente une résistance à la traction qui est inférieure à la résistance à la traction de la bande moins souple.

12. Procédé **selon la revendication 10 ou la revendication 11,** selon lequel chacun des deux stratifiés **(1)** inclut une couche de renfort, une couche de filé-lié **(21)** et un film actif **(25)** entre la couche de renfort et la couche de filé-lié **(21),** selon lequel la bande plus souple **(60)** n'inclut aucune partie de la couche de renfort.

13. Procédé **selon la revendication 12,** selon lequel le matériau adhésif est appliqué sur le film actif **(25)** d'un stratifié **(1)** et la couche de filé-lié **(21)** ou le film actif **(25)** de l'autre stratifié **(1).**

14. Procédé **selon l'une quelconque des revendications 10 à 13,** selon lequel les deux stratifiés sont **conformes à l'une quelconque des revendications 1 à 9.**
